# FASCICULE DE BREVET EUROPEEN

(11) **EP 3 370 149 B1**
(45) Date de publication et mention de la délivrance du brevet: **13.11.2024**
(21) Numéro de dépôt: 17186780.7
(22) Date de dépôt: 18.08.2017
(51) Int. Cl.: G06F 9/445, G06V 20/10, H04M 1/72454, H04W 4/02

(54) **PROCÉDÉ DE CONTRÔLE DE LA DÉTECTION EN TEMPS RÉEL D'UNE SCÈNE, PERMETTANT LA DÉTERMINATION DE CONTEXTE PAR UN APPAREIL DE COMMUNICATION SANS FIL, ET APPAREIL CORRESPONDANT**
VERFAHREN ZUR STEUERUNG DER SZENE-ERKENNUNG IN ECHTZEIT, UM ZUR BESTIMMUNG EINES KONTEXTES MITTELS EINES DRAHTLOSEN GERÄTES, UND DAZUGEHÖRIGEN VORRICHTUNG
METHOD OF CONTROLLING SCENE DETECTION IN REAL TIME IN ORDER TO DETERMINE A CONTEXT USING A WIRELLES DEVICE AND, CORRESPONDING APPARATUS

(30) Priorité: 02.03.2017 FR 1751693
(43) Date de publication de la demande: 05.09.2018
(73) Titulaire: STMicroelectronics (Rousset) SAS, 13790 Rousset (FR)
(72) Inventeur: DEMAJ, Pierre, 06200 NICE (FR); FOLLIOT, Laurent, 06620 GOURDON (FR)
(74) Mandataire: Casalonga

(56) Documents cités:
- ANDRE C SANTOS ET AL: "A Domain-Specific Language for the Specification of Adaptable Context Inference", EMBEDDED AND UBIQUITOUS COMPUTING (EUC), 2011 IFIP 9TH INTERNATIONAL CONFERENCE ON, IEEE, 24 October 2011 (2011-10-24), pages 268 - 273, XP032074987, ISBN: 978-1-4577-1822-9, DOI: 10.1109/EUC.2011.4
- MEEYEON LEE ET AL: "Analysis of Characteristics of Power Consumption for Context-Aware Mobile Applications", INFORMATION, vol. 5, no. 4, 14 November 2014 (2014-11-14), pages 612 - 621, XP055386286, DOI: 10.3390/info5040612
- ROBERT GUINNESS: "Beyond Where to How: A Machine Learning Approach for Sensing Mobility Contexts Using Smartphone Sensors", SENSORS, vol. 15, no. 5, 28 April 2015 (2015-04-28), pages 9962 - 9985, XP055386832, DOI: 10.3390/s150509962
- HIRAM GALEANA-ZAPIÉN ET AL: "Mobile Phone Middleware Architecture for Energy and Context Awareness in Location-Based Services", SENSORS, vol. 14, no. 12, 10 December 2014 (2014-12-10), pages 23673 - 23696, XP055386556, DOI: 10.3390/s141223673

## Description

Des modes de mise en oeuvre et de réalisation de l'invention concernent le contrôle de la détection en temps réel d'une scène par un appareil de communication sans fil, par exemple un téléphone mobile cellulaire intelligent (« smartphone ») ou encore une tablette numérique, équipé d'au moins un capteur de mesure environnemental comme par exemple un accéléromètre.

Certains appareils de communication sans fil comme par exemple certains types de « smartphones » ou de tablettes sont capables aujourd'hui d'effectuer des détections de scène ce qui permet de déterminer dans quel environnement se situe l'utilisateur du téléphone ou de la tablette. Cela peut ainsi permettre à une tierce partie, par exemple un annonceur publicitaire ou un organisme culturel par exemple d'envoyer des informations pertinentes en liaison avec le lieu dans lequel se situe l'utilisateur de l'appareil.

Ainsi, par exemple si l'utilisateur se situe dans un lieu touristique donné, on peut lui envoyer ainsi des adresses de restaurant à proximité de l'endroit où il se trouve. De même, on peut également lui envoyer des informations relatives à certains monuments qui se situent à proximité de l'endroit où il se trouve.

Il est également possible de faire effectuer certains réglages automatiquement par le téléphone (par exemple on détecte à l'aide d'un capteur audio que l'endroit est calme et le téléphone se met lui-même en mode vibreur).

Actuellement, la détection de la scène par le téléphone peut s'effectuer à intervalles fixes. Cependant, ceci ne fournit aucune flexibilité ce qui peut conduire à une consommation indue de courant préjudiciable à la longévité de la batterie du téléphone.

Une autre solution peut consister à utiliser l'application GPS du téléphone pour pouvoir localiser en temps réel l'utilisateur et par conséquent la scène détectée.

Cependant, là encore, l'utilisation de la fonction GPS est préjudiciable pour la consommation du téléphone.

L'article de HIRAM GALEANA-ZAPIÉN ET AL: "Mobile Phone Middleware Architecture for Energy and Context Awareness in Location-Based Services", SENSORS, vol. 14, no. 12, 10 décembre 2014 (2014-12-10), pages 23673-23696, XP055386556, décrit une architecture d'intergiciels suivant l'évolution spatio-temporelle d'un appareil de communication sans fil équipé d'un capteur GPS, et configurée pour déterminer un état de mobilité de l'appareil et adapter à la volée le taux d'échantillonnage du capteur GPS en fonction de l'état de mobilité détecté de façon à réduire la consommation énergétique de l'appareil.

L'article d'ANDRE C SANTOS ET AL: "A Domain-Specific Language for the Spécification of Adaptable Context Inference", EMBEDDED AND UBIQUITOUS COMPUTING (EUC), 2011 IFIP 9TH INTERNATIONAL CONFERENCE ON, IEEE, 24 octobre 2011 (2011-10-24), pages 268-273, XP032074987, ISBN: 978-1-4577-1822-9, décrit un "langage spécifique au domaine" et une infrastructure d'intergiciels pour supporter des spécifications, déploiements et entretiens de procédés d'inférence de scene adaptatifs

L'article de MEEYEON LEE ET AL: "Analysis of Characteristics of Power Consumption for Context-Aware Mobile Applications", INFORMATION, vol. 5, no. 4, 14 novembre 2014 (2014-11-14), pages 612-621, XP055386286, décrit une analyse des caractéristiques de consummation d'énergie pour les applications mobiles contextuelles, qui permet de définir deux facteurs principaux qui influencent significativement la consommation d'énergie.

L'article de ROBERT GUINNESS: "Beyond Where to How: A Machine Learning Approach for Sensing Mobility Contexts Using Smartphone Sensors", SENSORS, vol. 15, no. 5, 28 avril 2015 (2015-04-28), pages 9962-9985, XP055386832, présente des résultats de recherche sur l'utilisation des capteurs de "smartphones" (typiquement GPS et accéléromètres), d'informations géospatiales (points d'intérêts tells que des arrêts de bus et des gares ferroviaires),de recherche automatique pour mesurer des contextes de mobilité.

Il existe donc un besoin d'améliorer la prise de décision quant à la détection d'une scène par un appareil de communication sans fil, par exemple un téléphone mobile cellulaire ou une tablette, qui permette une plus grande flexibilité et présente un impact réduit sur la consommation de courant.

Et, selon un mode de mise en oeuvre et de réalisation, on va utiliser au moins une scène précédemment détectée, et plus généralement plusieurs scènes précédentes pour améliorer la prise de décision et suivre au mieux les changements de scènes tout en économisant de l'énergie an l'absence de changement de scène.

Différents aspects, modes de mise en oeuvre et de réalisation de l'invention sont définis par les revendications annexées.

Ainsi, selon un aspect, il est proposé un procédé de contrôle de la détection en temps réel d'au moins une scène par un appareil de communication sans fil, comprenant une succession d'étapes de détection de scène mutuellement espacées d'intervalles temporels et un ajustement de l'intervalle temporel séparant une étape courante de détection de scène de l'étape précédente de détection de scène en fonction d'au moins un critère d'ajustement lié à au moins une scène précédente effectivement détectée.

Cette scène précédente effectivement détectée est en général la scène précédant effectivement la scène courante, mais pourrait être une autre scène précédente, dans le cas par exemple où la scène précédant effectivement la scène courante ne serait pas exploitable pour diverses raisons ou présenterait une anomalie par exemple ou encore serait détectée avec une confiance faible.

Par détection de scène, on entend notamment une discrimination de la scène dans laquelle se trouve l'appareil de communication sans fil. Plusieurs solutions connues existent pour détecter (discriminer) une scène. Ces solutions utilisent par exemple un ou plusieurs capteurs dédiés associés généralement à un algorithme spécifique.

Ces capteurs peuvent être, notamment dans des applications requérant très peu de consommation de courant, des capteurs de mesure environnementaux par exemple des accéléromètres et/ou des gyroscopes et/ou des magnétomètres et/ou des microphones. Il s'agit là d'une approche multimodale. Et dans ce cas un exemple d'algorithme spécifique peut être un algorithme mettant en oeuvre un arbre binaire de décisions sur la base de descripteurs ou attributs résultant de traitements particuliers (par exemple des filtrages) sur les données brutes issues des capteurs. Ces descripteurs peuvent être par exemple des moyennes, des valeurs d'énergie, des variances, etc...

Par capteur de mesure environnemental on entend notamment tout type de capteur capable de fournir des informations sur l'environnement dans lequel se trouve l'appareil de communication sans fil, incluant par exemple des caractéristiques spatiotemporelles de l'environnement de l'appareil, comme par exemple le caractère temporellement figé ou non de l'environnement, la vitesse d'évolution de la modification spatiotemporelle de l'environnement (à partir de la détection du mouvement de l'appareil) et/ou des caractéristiques sonores et/ou spatiales et/ou visuelles de cet environnement, comme par exemple le niveau de bruit de l'environnement et/ou l'altitude et/ou le niveau de luminosité de l'environnement (à partir par exemple de capteurs tels que des baromètres, des capteurs de proximité, des capteurs optiques.....).

Le ou les capteurs utilisés pour la détection de la scène peuvent être différents du ou des capteurs environnementaux.

Cela étant notamment dans un contexte où l'appareil est constamment sous tension (Always-On) et où la durée de vie de la batterie est un critère important, l'un au moins des capteurs environnementaux peut être aussi un capteur utilisé pour la détection de scène. Ce peut être le cas par exemple mais non limitativement pour un accéléromètre qui peut être utilisé à la fois comme capteur environnemental pour donner une indication sur l'intensité du mouvement de l'appareil et comme capteur contribuant à la détection de scène.

Plusieurs critères d'ajustement sont possibles pour décider de modifier l'intervalle temporel séparant une étape courante de détection de scène de l'étape précédente de détection de scène. On peut par exemple détecter la présence d'un signal particulier provenant d'un capteur particulier signifiant une modification particulière de l'environnement de la scène nécessitant soit une détection de scène plus fréquente soit autorisant une détection de scène moins fréquente. Ce capteur particulier, par exemple un accéléromètre ou un gyroscope, peut être un détecteur d'activité dont la sortie donne une indication sur la rapidité de changement de l'environnement.

Cela étant selon un mode de mise en oeuvre, lorsque chaque scène effectivement détectée appartient à un ensemble, ou corpus, de scènes de référence, chaque scène de référence est associée à une durée de référence et ledit critère d'ajustement liée à ladite au moins une scène précédente effectivement détectée est une durée qui est obtenue à partir de l'une au moins des durées de référence.

Selon un mode de mise en oeuvre, ledit ajustement peut être fonction d'au moins un critère d'ajustement lié à K scènes précédentes effectivement détectées, K étant un entier supérieur à 1.

L'utilisation de K scènes précédentes effectivement détectées est avantageuse, notamment dans le cas où la scène précédente est détectée avec une confiance faible. En effet dans ce cas la prise de décision sur ces K scènes permet en quelque sorte de filtrer la ou les scènes détectées avec une confiance faible.

Ainsi on peut par exemple considérer comme scène effectivement détectée, celle qui est majoritairement détectée parmi les K scènes précédentes et d'adopter comme critère d'ajustement celui de cette scène majoritaire.

La valeur de K peut également varier en fonction de la nature de la transition entre deux scènes précédentes successives effectivement détectées.

Ainsi si par exemple la transition révèle que l'on passe d'une scène quasi statique à une scène évoluant rapidement, on peut augmenter la valeur de K.

Selon un mode de mise en oeuvre dans lequel l'appareil est équipé d'au moins un capteur de mesure environnemental, chaque étape de détection de scène est avantageusement effectuée à partir de valeurs de mesure délivrées par ledit au moins un capteur de mesure environnemental.

Ledit au moins un capteur de mesure environnemental peut comprendre au moins un accéléromètre et/ou au moins un capteur audio.

Selon un mode de mise en oeuvre dans lequel l'appareil de communication sans fil est équipé de plusieurs capteurs de mesure environnementaux, chaque étape de détection de scène est avantageusement effectuée à partir de valeurs de mesure délivrées par lesdits capteurs.

Lesdits capteurs de mesure environnementaux peuvent être choisis dans le groupe formé par un accéléromètre, un gyroscope, un magnétomètre, un capteur audio, un baromètre, un capteur de proximité, un capteur optique.

En d'autres termes, on peut utiliser un ou plusieurs accéléromètres ou alors un accéléromètre en combinaison avec un gyroscope éventuellement en combinaison avec un magnétomètre ou encore plusieurs capteurs audio ou alors un ou plusieurs capteurs audio en combinaison avec un ou plusieurs accéléromètres, ou encore un gyroscope ou encore un magnétomètre.

Chaque étape de détection de scène peut comprendre avantageusement une mise en oeuvre d'un algorithme de classification ou classifieur, et de préférence une mise en oeuvre d'un méta algorithme de classification ou méta classifieur qui effectue par exemple un vote majoritaire sur les cinq dernières mesures afin d'éviter des erreurs aberrantes, et qui peut être de préférence réinitialisé après chaque modification d'un intervalle temporel.

Selon un autre aspect, il est proposé un appareil de communication sans fil, comprenant des moyens de détection configurés pour détecter en temps réel au moins une scène, et des moyens de contrôle configurés activer successivement les moyens de détection de façon à mettre en oeuvre une succession d'étapes de détection de scène mutuellement espacées d'intervalles temporels et pour effectuer un ajustement de l'intervalle temporel séparant une étape courante de détection de scène de l'étape précédente de détection de scène en fonction d'au moins un critère d'ajustement lié à au moins une scène précédente effectivement détectée.

Selon un mode de réalisation, l'appareil comprend des moyens de mémoire configurés pour stocker des identifiants respectivement associés à un ensemble de scènes de référence, chaque scène effectivement détectée appartenant audit ensemble de scènes de référence, chaque scène de référence étant associée à une durée de référence, et ledit critère d'ajustement liée à ladite au moins une scène précédente effectivement détectée est une durée obtenue à partir de l'une au moins des durées de référence.

Selon un mode de réalisation, les moyens de contrôle sont configurés pour effectuer ledit ajustement en fonction d'au moins un critère d'ajustement lié à K scènes précédentes effectivement détectées, K étant un entier supérieur à 1.

Selon un mode de réalisation, les moyens de contrôle sont configurés pour faire varier la valeur de K en fonction de la nature de la transition entre deux scènes précédentes successives effectivement détectées.

Selon un mode de réalisation dans lequel l'appareil est équipé d'au moins un capteur de mesure environnemental, les moyens de détection sont configurés pour effectuer chaque étape de détection de scène à partir de valeurs de mesure délivrées par ledit au moins un capteur de mesure environnemental.

Selon un mode de réalisation, ledit au moins un capteur de mesure environnemental comprend au moins un accéléromètre.

Selon un mode de réalisation ledit au moins un capteur de mesure environnemental comprend au moins un capteur audio.

Selon un mode de réalisation dans lequel l'appareil est équipé de plusieurs capteurs de mesure environnementaux, les moyens de détection sont configurés pour effectuer chaque étape de détection de scène à partir de valeurs de mesure délivrées par lesdits capteurs.

Lesdits capteurs de mesure environnementaux sont par exemple choisis dans le groupe formé par un accéléromètre, un gyroscope, un magnétomètre, un capteur audio, un baromètre, un capteur de proximité, un capteur optique.

Selon un mode de réalisation, les moyens de détection de scène sont configurés pour mettre en oeuvre un algorithme de classification, par exemple un méta algorithme de classification.

Selon un mode de réalisation, les moyens de contrôle sont configurés pour effectuer une réinitialisation du méta algorithme de classification après chaque modification d'un intervalle temporel.

L'appareil peut former par exemple un téléphone mobile cellulaire ou une tablette numérique.

D'autres avantages et caractéristiques de l'invention apparaîtront à l'examen de la description détaillée et de modes de mise en oeuvre et de réalisation, nullement limitatifs, et des dessins annexés sur lesquels :

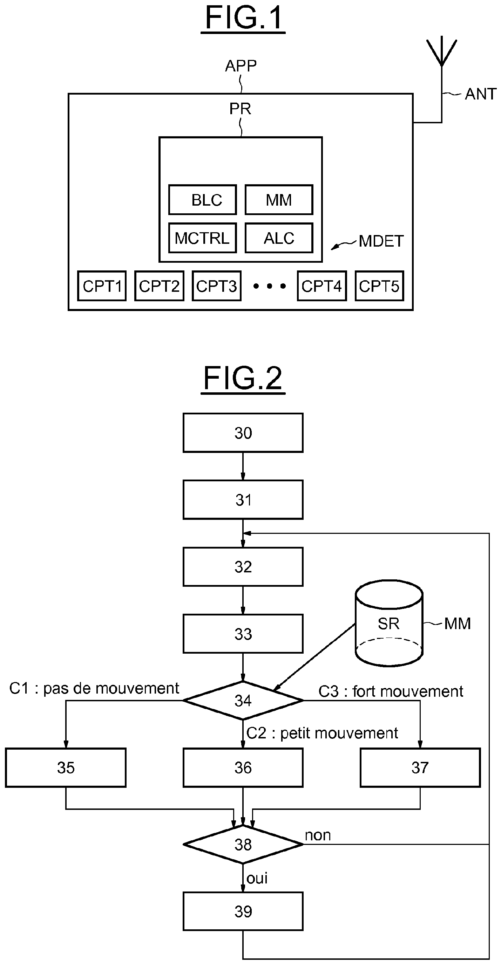

- Les figures 1 à 3 illustrent schématiquement différents modes de mise en oeuvre et de réalisation de l'invention.

Sur la figure 1, la référence APP désigne un appareil électronique, par exemple un appareil de communication sans fil équipé d'une antenne ANT. Cet appareil peut être un téléphone mobile cellulaire tel qu'un téléphone intelligent (smartphone) ou encore une tablette numérique.

L'appareil APP comporte ici plusieurs capteurs de mesure environnementaux CPT1-CPT5, sans que ce nombre ne soit limitatif.

A titre indicatif, les capteurs CPT1, CPT2, CPT3, CPT4, CPT5 peuvent être choisis dans le groupe formé par un accéléromètre, un gyroscope, un magnétomètre, un capteur audio tel qu'un microphone un baromètre, un capteur de proximité, un capteur optique.

Bien entendu, l'appareil peut être équipé de plusieurs accéléromètres et/ou de plusieurs gyroscopes et/ou plusieurs magnétomètres et/ou de plusieurs capteurs audio et/ou d'un baromètre, et/ou d'un ou plusieurs capteurs de proximité, et/ou un ou plusieurs capteurs optiques.

L'un au moins et en général certains au moins de ces capteurs de mesure environnementaux, peuvent, en particulier dans une approche multimodale, former en combinaison avec un algorithme classique de discrimination ALC, par exemple du type arbre de décision binaire, destiné à travailler par exemple sur des données brutes filtrées issues de ces capteurs, des moyens de détection MDET configurés pour détecter une scène. Ces moyens MDET peuvent ainsi par exemple détecter si l'appareil APP se situe dans tel ou tel environnement (restaurant, véhicule en mouvement, etc.....).

En variante, l'appareil APP pourrait être équipé d'un capteur spécifique, par exemple le capteur CPT1, différent des capteurs environnementaux mentionnés ci-dessus, par exemple une micro caméra, apte à détecter une scène de l'environnement de l'appareil.

Cela étant dans un contexte où l'appareil est constamment sous tension (Always-On) et où la durée de vie de la batterie est un critère important, il est préférable d'utiliser comme capteurs contribuant à détecter une scène de l'environnement de l'appareil, un ou des capteurs du type environnemental mentionnés ci-dessus.

On suppose maintenant à titre d'exemple non limitatif que tous les capteurs environnementaux CPT1-CPT5 contribuent à la détection de la scène et fournissent des données à des instants de mesure à l'algorithme de discrimination ALC pour permettre de détecter la scène.

L'algorithme de discrimination mis en oeuvre dans les moyens MDET de détection de scène peut être un algorithme de classification ou classifieur qui est un algorithme bien connu de l'homme du métier. A cet égard, l'homme du métier pourra se référer à toutes fins utiles par exemple
à l'ouvrage de Jason Brownlee intitulé « Master Learning Algorithms, discover how they work and implement them from scratch », 2016, ou bien
à l'article de André C. Santos et autres intitulé « Context Inference for Mobile Applications in the UPCASE Project » Second International Conférence, Mobilware 2009, Berlin, Germany, April 28-29, 2009 Proceedings Pages 352-365, ou encore
à l'article de Robert E. Guinness intitulé « Beyond Where to How : A Machine Learning Approach for Sensing Mobility Contexts Using Smartphone Sensors », Sensors 2015, 15, 9962-9985.

Dans le cadre d'une implémentation particulièrement simple, on peut utiliser comme classifieur un arbre de décision ayant réalisé une phase d'apprentissage sur une base de données de mesure des capteurs environnementaux. Un tel arbre de décision, est particulièrement simple à mettre en oeuvre et ne nécessite que quelques octets de mémoire et une fréquence de travail inférieure à 0,01 MHz.

Cela étant, il est préférable d'utiliser un méta algorithme de classification (ou méta classifieur) également bien connu de l'homme du métier qui va par exemple effectuer un vote majoritaire sur les cinq dernières mesures fournies par les capteurs par exemple, de façon à éviter des erreurs aberrantes.

Alors qu'on peut utiliser au minimum un accéléromètre voire plusieurs accéléromètres, on aura plus de précisions si l'on utilise également un gyroscope voire un magnétomètre.

Cela étant, il peut être particulièrement intéressant d'utiliser des capteurs audio qui sont des descripteurs utiles d'environnement. En effet, si l'appareil n'est pas en mouvement, alors le capteur audio peut être intéressant pour détecter la nature de cet environnement. Bien entendu, en fonction des applications, on peut utiliser soit des capteurs environnementaux du type accéléromètres voire gyroscopes ou magnétomètres, soit des capteurs audio ou alors une combinaison de ces deux types de capteurs. Cela étant dans une optique de simplicité du classifieur, on peut avantageusement choisir de ne pas retenir d'approche multimodale, c'est-à-dire ne pas utiliser de combinaison de ces deux types de capteurs.

Outre ces capteurs, l'appareil APP comporte un bloc BLC apte à coopérer avec les capteurs CPTi et les moyens de détection MDET pour traiter la scène détectée et transmettre les informations via l'antenne ANT de l'appareil.

L'appareil comporte également des moyens de contrôle MCTRL configurés pour activer successivement les moyens de détection MDET de façon à mettre en oeuvre une succession d'étapes de détection de scène mutuellement espacées d'intervalles temporels et pour effectuer un ajustement de l'intervalle temporel séparant une étape courante de détection de scène de l'étape précédente de détection de scène en fonction d'au moins un critère d'ajustement lié à au moins la scène précédente effectivement détectée.

Dans l'exemple décrit ici, l'appareil APP comporte également des moyens de mémoire MM configurés pour stocker des identifiants respectivement associés à un ensemble, ou corpus, de scènes de référence SR, chaque scène de référence étant associée à une durée de référence.

Ces scènes de référence qui ont été obtenues par les moyens de détection lors d'une phase d'apprentissage peuvent être par exemple, sans que ceci ne soit limitatif, des scènes « BUS », « BUREAU », « RESTAURANT », « TRAIN » représentatives de l'environnement dans lequel se trouve l'appareil.

Bien entendu les durées de référence associées à ces scènes varient selon la nature de la scène de référence.

Ainsi la durée de référence associée à une scène stable, comme par exemple la scène « BUREAU » sera plus longue que la durée de référence d'une scène susceptible d'évolutions rapides, comme par exemple la scène « TRAIN » ou « BUS ».

En fait comme on va le voir ci-après, cette durée de référence va déterminer l'intervalle temporel entre deux détections de scènes successives.

En effet, dans le mode de réalisation décrit ici, chaque scène effectivement détectée appartient audit ensemble de scènes de référence, et ledit critère d'ajustement liée à une scène précédente effectivement détectée est la durée de référence correspondante.

Ces différents moyens BLC, ALC et MCTRL sont par exemple réalisés par des modules logiciels au sein du processeur PR de l'appareil APP.

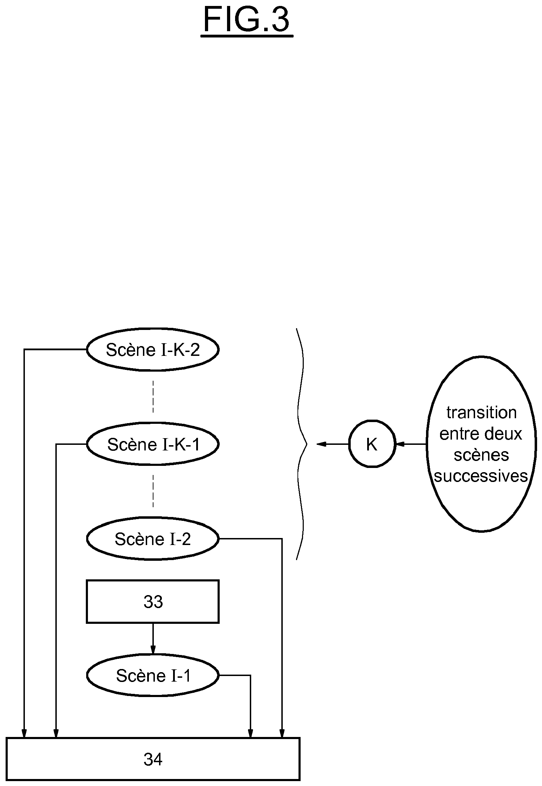

On se réfère maintenant plus particulièrement à la figure 3 pour décrire un mode de mise en oeuvre du procédé selon l'invention.

Ceci est mis en oeuvre par exemple par une machine d'état. Après une phase d'initialisation 30, on fixe, dans une étape 31, une valeur initiale par défaut pour l'intervalle temporel entre deux instants de détection de scènes par les moyens de détection MDET. Cette valeur initiale par défaut peut être de l'ordre de quelques secondes, par exemple 2, 4 ou 6 secondes.

Puis, à l'issue de chaque intervalle temporel (étape 32) on acquiert (étape 33) les valeurs de mesure fournies par les capteurs environnementaux et on détecte la scène courante en utilisant le classifieur ou le métaclassifieur.

Et, dans une étape 34, on détermine à quelle scène de référence (SR) correspond la scène qui vient d'être détectée.

Il serait alors possible de fixer la valeur de l'intervalle temporel séparant la détection de scène qui vient d'avoir lieu de la détection suivante de scène à la durée de référence associée à la scène de référence correspondante.

Cela étant dans le cas où l'on a de nombreuses scènes de référence, il peut être plus simple de définir des sous ensembles, par exemple trois sous-ensembles, de scènes de référence correspondant par exemple à des classes de variations d'environnement.

Ainsi on peut par exemple définir une classe C1 correspondant à un environnement de scène considéré comme stable, contenant par exemple les scènes « BUREAU » et « RESTAURANT », une classe C2 correspondant à un environnement de scène considéré comme évoluant rapidement, contenant par exemple la scène « TRAIN », et une classe C3 correspondant à un environnement de scène considéré comme intermédiaire c'est-à-dire évoluant moins rapidement, contenant par exemple la scène « BUS».

On peut alors prendre comme durée de référence associée à une classe, par exemple la moyenne des durées de référence de chaque scène de la classe ou bien la durée de référence minimale ou encore la durée de référence maximale, sans que ces exemples ne soient limitatifs.

En fonction de la classe obtenue à l'issue de l'étape 34, on va définir trois valeurs différentes pour l'intervalle temporel séparant l'instant de détection la scène courante de l'instant de détection de la scène suivante.

Ainsi, dans l'étape 35 on pourra fixer une valeur d'intervalle temporel de l'ordre de 10 secondes tandis que l'on pourra fixer cette valeur à 6 secondes dans l'étape 36 et à deux secondes dans l'étape 37.

En d'autres termes, plus le mouvement va être rapide, plus on va diminuer l'intervalle temporel entre deux détections de scènes successives.

Dans l'étape 38, on vérifie si cette valeur d'intervalle temporel a été modifiée par rapport à la valeur précédemment stockée.

Si tel est le cas, alors dans l'étape 39, on réinitialise le classifieur avant de revenir à l'étape 32.

Dans le cas contraire, on n'effectue pas de réinitialisation du classifieur.

Si l'on considère dans l'étape 33 nouvellement exécuté que la scène détectée est la scène courante, alors on voit bien que l'intervalle temporel pris en compte dans l'étape 32 a été ajusté en fonction d'un critère d'ajustement lié à la détection de scène précédente effectuée dans l'étape 33 précédente.

Alors que dans le mode de mise en oeuvre qui vient d'être décrit l'intervalle temporel entre deux détections de scènes successives est ajusté à partir de la scène précédemment détectée, il serait possible, comme illustré sur la figure 3, de déterminer dans les étapes 34 à 37, la valeur de l'intervalle temporel qui va séparer la détection de la scène I-1 effectuée dans l'étape 33 de la détection de la scène suivante I qui sera effectuée dans l'étape 33 suivante, à partir de K scènes détectées précédentes, ici les K scènes I-K-2 à 1-2.

A cet égard plusieurs possibilités sont offertes.

Deux exemples non exhaustifs sont mentionnés ci-après.

On peut calculer la moyenne des durées de référence associées aux K scènes de références correspondantes.

On peut aussi prendre parmi les K scènes précédentes celle qui est majoritairement présente et déterminer alors la classe C1, C2 ou C3 correspondante.

Bien entendu les K scènes précédentes peuvent être consécutives ou non pour certaines au moins d'entre elles.

Par ailleurs la valeur de K peut varier en fonction de la nature de la transition entre deux scènes précédentes successives effectivement détectées.

Ainsi si par exemple la transition révèle que l'on passe d'une scène quasi statique à une scène évoluant rapidement, on peut augmenter la valeur de K pour l'ajustement de l'intervalle temporel qui sera utilisé pour les détections de scènes suivantes.

## Revendications

1. Procédé de contrôle de la détection en temps réel d'au moins une scène par un appareil de communication sans fil, comprenant une succession d'étapes de détection de scène (33) mutuellement espacées d'intervalles temporels et un ajustement (34-37) de l'intervalle temporel séparant une étape courante de détection de scène (33) de l'étape précédente de détection de scène (33) en fonction d'au moins un critère d'ajustement lié à au moins une scène précédente effectivement détectée, chaque scène effectivement détectée appartenant à un ensemble de scènes de référence (SR), chaque scène de référence étant associée à une durée de référence, et ledit critère d'ajustement lié à ladite au moins une scène précédente effectivement détectée est la durée de référence correspondant à la scène précédente effectivement détectée.

2. Procédé de contrôle de la détection en temps réel d'au moins une scène par un appareil de communication sans fil, comprenant une succession d'étapes de détection de scène (33) mutuellement espacées d'intervalles temporels et un ajustement (34-37) de l'intervalle temporel séparant une étape courante de détection de scène (33) de l'étape précédente de détection de scène (33) en fonction d'au moins un critère d'ajustement lié à K scènes précédentes effectivement détectées (I-K-2 à 1-2), K étant un entier supérieur à 1, chaque scène effectivement détectée appartenant à un ensemble de scènes de référence (SR), chaque scène de référence étant associée à une durée de référence et ledit critère d'ajustement lié à ladite au moins une scène précédente effectivement détectée est une durée obtenue à partir de l'une au moins des K durées de référence correspondant aux K scènes précédentes effectivement détectées.

3. Procédé selon la revendication 2, dans lequel le critère d'ajustement lié à ladite au moins une scène précédente effectivement détectée est la moyenne des K durées de référence correspondant aux K scènes précédentes effectivement détectées.

4. Procédé selon la revendication 2, dans lequel le critère d'ajustement lié à ladite au moins une scène précédente effectivement détectée est la durée de référence correspondant à la scène majoritairement détectée parmi les K scènes précédentes effectivement détectées.

5. Procédé selon l'une des revendications 2 à 4, dans lequel la valeur de K varie en fonction de la nature de la transition entre deux scènes précédentes successives effectivement détectées.

6. Procédé selon l'une des revendications précédentes, dans lequel l'appareil est équipé d'au moins un capteur de mesure environnemental (CPTi) et chaque étape de détection de scène (33) est effectuée à partir de valeurs de mesure délivrées par ledit au moins un capteur de mesure environnemental.

7. Procédé selon la revendication 6, dans lequel ledit au moins un capteur de mesure environnemental (CPTi) comprend au moins un accéléromètre.

8. Procédé selon l'une des revendications 6 ou 7, dans lequel ledit au moins un capteur de mesure environnemental (CPTi) comprend au moins un capteur audio.

9. Procédé selon l'une des revendications précédentes, dans lequel l'appareil de communication sans fil est équipé de plusieurs capteurs de mesure environnementaux (CPTi), et chaque étape de détection de scène est effectuée à partir de valeurs de mesure délivrées par lesdits capteurs.

10. Procédé selon la revendication 9, dans lequel lesdits capteurs de mesure environnementaux (CPTi) sont choisis dans le groupe formé par un accéléromètre, un gyroscope, un magnétomètre, un capteur audio, un baromètre, un capteur de proximité, un capteur optique.

11. Procédé selon l'une des revendications précédentes, dans lequel chaque étape de détection de scène comprend une mise en oeuvre d'un algorithme de classification (ALC).

12. Procédé selon la revendication 11, dans lequel chaque étape de détection de scène comprend une mise en oeuvre d'un méta algorithme de classification.

13. Procédé selon la revendication 12, comprenant une réinitialisation (39) du méta algorithme de classification après chaque modification d'un intervalle temporel.

14. Appareil de communication sans fil, comprenant des moyens de détection (MDET) configurés pour détecter en temps réel au moins une scène, et des moyens de contrôle (MCTRL) configurés pour activer successivement les moyens de détection de façon à mettre en oeuvre une succession d'étapes de détection de scène mutuellement espacées d'intervalles temporels et pour effectuer un ajustement de l'intervalle temporel séparant une étape courante de détection de scène de l'étape précédente de détection de scène en fonction d'au moins un critère d'ajustement lié à au moins une scène précédente effectivement détectée, l'appareil comprenant en outre des moyens de mémoire (MM) configurés pour stocker des identifiants respectivement associés à un ensemble de scènes de référence (SR), chaque scène effectivement détectée appartenant audit ensemble de scènes de référence, chaque scène de référence étant associée à une durée de référence, et ledit critère d'ajustement liée à ladite au moins une scène précédente effectivement détectée est la durée de référence correspondant à la scène précédente effectivement détectée.

15. Appareil de communication sans fil, comprenant des moyens de détection (MDET) configurés pour détecter en temps réel au moins une scène, et des moyens de contrôle (MCTRL) configurés pour activer successivement les moyens de détection de façon à mettre en oeuvre une succession d'étapes de détection de scène mutuellement espacées d'intervalles temporels et pour effectuer un ajustement de l'intervalle temporel séparant une étape courante de détection de scène de l'étape précédente de détection de scène en fonction d'au moins un critère d'ajustement lié à K scènes précédentes effectivement détectées (I-K-2 à I-2), K étant un entier supérieur à 1, l'appareil comprenant en outre des moyens de mémoire (MM) configurés pour stocker des identifiants respectivement associés à un ensemble de scènes de référence (SR), chaque scène effectivement détectée appartenant audit ensemble de scènes de référence, chaque scène de référence étant associée à une durée de référence, et ledit critère d'ajustement liée à ladite au moins une scène précédente effectivement détectée est une durée obtenue à partir de l'une au moins des K durées de référence correspondant aux K scènes précédentes effectivement détectées.

16. Appareil selon la revendication 15, dans lequel le critère d'ajustement lié à ladite au moins une scène précédente effectivement détectée est la moyenne des K durées de référence correspondant aux K scènes précédentes effectivement détectées.

17. Appareil selon la revendication 15, dans lequel le critère d'ajustement lié à ladite au moins une scène précédente effectivement détectée est la durée de référence correspondant à la scène majoritairement détectée parmi les K scènes précédentes effectivement détectées.

18. Appareil selon l'une des revendications 15 à 17, dans lequel les moyens de contrôle (MCTRL) sont configurés pour faire varier la valeur de K en fonction de la nature de la transition entre deux scènes précédentes successives effectivement détectées.

19. Appareil selon l'une des revendications 14 à 18, équipé d'au moins un capteur de mesure environnemental (CPTi) et dans lequel les moyens de détection sont configurés pour effectuer chaque étape de détection de scène à partir de valeurs de mesure délivrées par ledit au moins un capteur de mesure environnemental.

20. Appareil selon la revendication 19, dans lequel ledit au moins un capteur de mesure environnemental (CPTi) comprend au moins un accéléromètre.

21. Appareil selon l'une des revendications 19 ou 20, dans lequel ledit au moins un capteur de mesure environnemental (CPTi) comprend au moins un capteur audio.

22. Appareil selon l'une des revendications 14 à 21, équipé de plusieurs capteurs de mesure environnementaux (CPTi), et dans lequel les moyens de détection (MDET) sont configurés pour effectuer chaque étape de détection de scène à partir de valeurs de mesure délivrées par lesdits capteurs.

23. Appareil selon la revendication 22, dans lequel lesdits capteurs de mesure environnementaux (CPTi) sont choisis dans le groupe formé par un accéléromètre, un gyroscope, un magnétomètre, un capteur audio, un baromètre, un capteur de proximité, un capteur optique.

24. Appareil selon l'une des revendications 14 à 23, dans lequel les moyens de détection de scène (MDET) sont configurés pour mettre en oeuvre un algorithme de classification (ALC).

25. Appareil selon la revendication 24, dans lequel les moyens de détection de scène (MDET) sont configurés pour mettre en oeuvre un méta algorithme de classification.

26. Appareil selon la revendication 25, dans lequel les moyens de contrôle (MCTRL) sont configurés pour effectuer une réinitialisation du méta algorithme de classification après chaque modification d'un intervalle temporel.

27. Appareil selon l'une des revendications 14 à 26, formant un téléphone mobile cellulaire ou une tablette numérique.

## Patentansprüche

1. Verfahren zum Steuern der Echtzeit-Erkennung mindestens einer Szene durch ein drahtloses Kommunikationsgerät, umfassend eine Reihenfolge von Szenenerkennungsschritten (33), die um Zeitintervalle voneinander beabstandet sind, und eine Anpassung (34-37) des Zeitintervalls, das einen aktuellen Szenenerkennungsschritt (33) vom vorherigen Szenenerkennungsschritt (33) trennt, in Abhängigkeit von mindestens einem Anpassungskriterium, das mit mindestens einer tatsächlich erkannten vorherigen Szene verknüpft ist, wobei jede tatsächlich erkannte Szene zu einem Satz von Referenzszenen (SR) gehört, wobei jede Referenzszene einer Referenzzeitdauer zugeordnet ist, und wobei das Anpassungskriterium, das mit der mindestens einen tatsächlich erkannten vorherigen Szene verknüpft ist, die Referenzzeitdauer ist, die der tatsächlich erkannten vorherigen Szene entspricht.

2. Verfahren zum Steuern der Echtzeit-Erkennung mindestens einer Szene durch ein drahtloses Kommunikationsgerät, umfassend eine Reihenfolge von Szenenerkennungsschritten (33), die um Zeitintervalle voneinander beabstandet sind, und eine Anpassung (34-37) des Zeitintervalls, das einen aktuellen Szenenerkennungsschritt (33) vom vorherigen Szenenerkennungsschritt (33) trennt, in Abhängigkeit von mindestens einem Anpassungskriterium, das mit K tatsächlich erkannten vorherigen Szenen (I-K-2 bis 1-2) verknüpft ist, wobei K eine ganze Zahl größer als 1 ist, wobei jede tatsächlich erkannte Szene zu einem Satz von Referenzszenen (SR) gehört, wobei jede Referenzszene einer Referenzzeitdauer zugeordnet ist, und wobei das Anpassungskriterium, das mit der mindestens einen tatsächlich erkannten vorherigen Szene verknüpft ist, eine Zeitdauer ist, die anhand der mindestens einen der K Referenzzeitdauern erhalten wurde, die den K tatsächlich erkannten vorherigen Szenen entsprechen.

3. Verfahren nach Anspruch 2, wobei das Anpassungskriterium, das mit der mindestens einen tatsächlich erkannten vorherigen Szene verknüpft ist, der Durchschnitt der K Referenzzeitdauern ist, die den K tatsächlich erkannten vorherigen Szenen entsprechen.

4. Verfahren nach Anspruch 2, wobei das Anpassungskriterium, das mit der mindestens einen tatsächlich erkannten vorherigen Szene verknüpft ist, die Referenzzeitdauer ist, die der größtenteils erkannten Szene aus den K tatsächlich erkannten vorherigen Szenen entspricht.

5. Verfahren nach einem der Ansprüche 2 bis 4, wobei der Wert von K in Abhängigkeit von der Art eines Übergangs zwischen zwei aufeinanderfolgenden tatsächlich erkannten vorherigen Szenen variiert.

6. Verfahren nach einem der vorhergehenden Ansprüche, wobei das Gerät mit mindestens einem Umgebungsmesssensor (CPTi) ausgestattet ist und jeder Szenenerkennungsschritt anhand der Messwerte durchgeführt wird, die von dem mindestens einen Umgebungsmesssensor ausgegeben werden.

7. Verfahren nach Anspruch 6, wobei der mindestens eine Umgebungsmesssensor (CPTi) mindestens einen Beschleunigungsmesser umfasst.

8. Verfahren nach einem der Ansprüche 6 oder 7, wobei der mindestens eine Umgebungsmesssensor (CPTi) mindestens einen Audiosensor umfasst.

9. Verfahren nach einem der vorhergehenden Ansprüche, wobei das drahtlose Kommunikationsgerät mit mehreren Umgebungsmesssensoren (CPTi) ausgestattet ist und jeder Szenenerkennungsschritt anhand von Messwerten durchgeführt wird, die von den Umgebungsmesssensoren ausgegeben werden.

10. Verfahren nach Anspruch 9, wobei die Umgebungsmesssensoren (CPTi) aus der Gruppe ausgewählt sind, die aus einem Beschleunigungsmesser, einem Gyroskop, einem Magnetometer, einem Audiosensor, einem Barometer, einem Näherungssensor und einem optischen Sensor besteht.

11. Verfahren nach einem der vorhergehenden Ansprüche, wobei jeder Szenenerkennungsschritt eine Implementierung eines Klassifizierungsalgorithmus (ALC) umfasst.

12. Verfahren nach Anspruch 11, wobei jeder Szenenerkennungsschritt eine Implementierung eines Metaklassifizierungsalgorithmus umfasst.

13. Verfahren nach Anspruch 12, umfassend eine Neuinitialisierung (39) des Metaklassifizierungsalgorithmus nach jeder Änderung eines Zeitintervalls.

14. Drahtloses Kommunikationsgerät, umfassend Erkennungseinrichtungen (MDET), die dazu konfiguriert sind, mindestens eine Szene in Echtzeit zu erkennen, und Steuereinrichtungen (MCTRL), die dazu konfiguriert sind, die Erkennungseinrichtungen nacheinander zu aktivieren, um eine Folge von Szenenerkennungsschritten zu implementieren, die durch Zeitintervalle voneinander beabstandet sind, und um eine Anpassung des Zeitintervalls, das einen aktuellen Szenenerkennungsschritt von einem vorherigen Szenenerkennungsschritt trennt, in Abhängigkeit von mindestens einem Anpassungskriterium auszuführen, das mit mindestens einer tatsächlich erkannten vorherigen Szene verknüpft ist, wobei das Gerät ferner Speichereinrichtungen (MM) umfasst, die dazu konfiguriert sind, Identifikatoren zu speichern, die jeweils einem Satz von Referenzszenen (SR) zugeordnet sind, wobei jede tatsächlich erkannte Szene zu einem Satz von Referenzszenen gehört, wobei jede Referenzszene einer Referenzzeitdauer zugeordnet ist, und wobei das Anpassungskriterium, das mit der mindestens einen tatsächlich erkannten vorherigen Szene verknüpft ist, die Referenzzeitdauer ist, die der tatsächlich erkannten vorherigen Szene entspricht.

15. Drahtloses Kommunikationsgerät, umfassend Erkennungseinrichtungen (MDET), die dazu konfiguriert sind, mindestens eine Szene in Echtzeit zu erkennen, und Steuereinrichtungen (MCTRL), die dazu konfiguriert sind, die Erkennungseinrichtung nacheinander zu aktivieren, um eine Folge von Szenenerkennungsschritten zu implementieren, die durch Zeitintervalle voneinander beabstandet sind, und um eine Anpassung des Zeitintervalls, das einen aktuellen Szenenerkennungsschritt von einem vorherigen Szenenerkennungsschritt trennt, in Abhängigkeit von mindestens einem Anpassungskriterium auszuführen, das mit K tatsächlich erkannten vorherigen Szenen (I-K-2 bis 1-2) verknüpft ist, wobei K eine ganze Zahl größer als 1 ist, wobei das Gerät ferner Speichereinrichtungen (MM) umfasst, die dazu konfiguriert sind, Identifikatoren zu speichern, die jeweils einem Satz von Referenzszenen (SR) zugeordnet sind, wobei jede tatsächlich erkannte Szene zum Satz von Referenzszenen gehört, wobei jede Referenzszene einer Referenzzeitdauer zugeordnet ist, und wobei das Anpassungskriterium, das mit der mindestens einen tatsächlich erkannten vorherigen Szene verknüpft ist, eine Zeitdauer ist, die anhand der mindestens einen der K Referenzzeitdauern erhalten wurde, die der K tatsächlich erkannten vorherigen Szenen entsprechen.

16. Gerät nach Anspruch 15, wobei das Anpassungskriterium, das mit der mindestens einen tatsächlich erkannten vorherigen Szene verknüpft ist, der Durchschnitt der K Referenzzeitdauern ist, die den K tatsächlich erkannten vorherigen Szenen entsprechen.

17. Gerät nach Anspruch 15, wobei das Anpassungskriterium, das mit der mindestens einen tatsächlich erkannten vorherigen Szene verknüpft ist, die Referenzzeitdauer ist, die der größtenteils erkannten Szene aus den K tatsächlich erkannten vorherigen Szenen entspricht.

18. Gerät nach einem der Ansprüche 15 bis 17, wobei die Steuereinrichtungen (MCTRL) dazu konfiguriert sind, den Wert von K in Abhängigkeit von der Art des Übergangs zwischen zwei aufeinanderfolgenden tatsächlich erkannten vorherigen Szenen zu variieren.

19. Gerät nach einem der Ansprüche 14 bis 18, das mit mindestens einem Umgebungsmesssensor (CPTi) ausgestattet ist, und wobei die Erkennungseinrichtungen dazu konfiguriert sind, jeden Szenenerkennungsschritt anhand der Messwerte auszuführen, die von dem mindestens einen Umgebungsmesssensor ausgegeben werden.

20. Gerät nach Anspruch 19, wobei der mindestens eine Umgebungsmesssensor (CPTi) mindestens einen Beschleunigungsmesser umfasst.

21. Gerät nach einem der Ansprüche 19 oder 20, wobei der mindestens eine Umgebungsmesssensor (CPTi) mindestens einen Audiosensor umfasst.

22. Gerät nach einem der Ansprüche 14 bis 21, das mit mehreren Umgebungsmesssensoren (CPTi) ausgestattet ist, und wobei die Erkennungseinrichtungen (MDET) dazu konfiguriert sind, jeden Szenenerkennungsschritt anhand der Messwerte auszuführen, die von den Sensoren ausgegeben werden.

23. Gerät nach Anspruch 22, wobei die Umgebungsmesssensoren (CPTi) aus der Gruppe ausgewählt sind, die aus einem Beschleunigungsmesser, einem Gyroskop, einem Magnetometer, einem Audiosensor, einem Barometer, einem Näherungssensor und einem optischen Sensor besteht.

24. Gerät nach einem der Ansprüche 14 bis 23, wobei die Szenenerkennungseinrichtungen (MDET) dazu konfiguriert sind, einen Klassifizierungsalgorithmus (ALC) zu implementieren.

25. Gerät nach Anspruch 24, wobei die Szenenerkennungseinrichtungen (MDET) dazu konfiguriert sind, einen Metaklassifizierungsalgorithmus zu implementieren.

26. Gerät nach Anspruch 25, wobei die Steuereinrichtungen (MCTRL) dazu konfiguriert sind, eine Neuinitialisierung des Metaklassifizierungsalgorithmus nach jeder Änderung eines Zeitintervalls auszuführen.

27. Gerät nach einem der Ansprüche 14 bis 26, das ein zellulares Mobiltelefon oder ein digitales Tablet bildet.

## Claims

1. A method for controlling the real-time detection of at least one scene by a wireless communication device, comprising a succession of scene detection steps (33) mutually spaced by time intervals and an adjustment (34-37) of the time interval separating a current scene detection step (33) from the preceding scene detection step (33) depending on at least one adjustment criterion linked to at least one preceding actually detected scene, each actually detected scene belonging to a set of reference scenes (SR), each reference scene being associated with a reference duration, and said adjustment criterion linked to said at least one preceding actually detected scene is the reference duration corresponding to the preceding actually detected scene.

2. The method for controlling the real-time detection of at least one scene by a wireless communication device, comprising a succession of scene detection steps (33) mutually spaced by time intervals and an adjustment (34-37) of the time interval separating a current scene detection step (33) from the preceding scene detection step (33) depending on at least one adjustment criterion linked to K preceding actually detected scenes (I-K-2 to 1-2), K being an integer greater than 1, each actually detected scene belonging to a set of reference scenes (SR), each reference scene being associated with a reference duration, and said adjustment criterion linked to said at least one preceding actually detected scene is a duration obtained from the at least one K reference durations corresponding to the K preceding actually detected scenes.

3. The method according to claim 2, wherein the adjustment criterion linked to said at least one preceding actually detected scene is the average of the K reference durations corresponding to the K preceding actually detected scenes.

4. The method according to claim 2, wherein the adjustment criterion linked to said at least one preceding actually detected scene is the reference duration corresponding to the mostly detected scene from the K preceding actually detected scenes.

5. The method according to one of claims 2 to 4, wherein the value of K varies according to the nature of the transition between two successive preceding actually detected scenes.

6. The method according to one of the preceding claims, wherein the device is equipped with at least one environmental measurement sensor (CPTi) and each scene detection step (33) is carried out on the basis of measurement values delivered by said at least one environmental measurement sensor.

7. The method according to claim 6, wherein said at least one environmental measurement sensor (CPTi) comprises at least one accelerometer.

8. The method according to one of claims 6 or 7, wherein said at least one environmental measurement sensor (CPTi) comprises at least one audio sensor.

9. The method according to one of the preceding claims, wherein the wireless communication device is equipped with a plurality of environmental measurement sensors (CPTi), and each scene detection step is carried out on the basis of measurement values delivered by said sensors.

10. The method according to claim 9, wherein said environmental measurement sensors (CPTi) are chosen from the group formed by an accelerometer, a gyroscope, a magnetometer, an audio sensor, a barometer, a proximity sensor and an optical sensor.

11. The method according to one of the preceding claims, wherein each scene detection step comprises an implementation of a classification algorithm (ALC).

12. The method according to claim 11, wherein each scene detection step comprises an implementation of a classification meta - algorithm.

13. The method according to claim 12, comprising a re-initialisation (39) of the classification meta-algorithm after each modification of a time interval.

14. A wireless communication device, comprising detection means (MDET) configured to detect in real time at least one scene, and control means (MCTRL) configured to successively activate the detection means in such a way as to implement a succession of scene detection steps mutually spaced at time intervals and for carrying out an adjustment of the time interval separating a current scene detection step from the preceding scene detection step, depending on at least one adjustment criterion linked to at least one preceding actually detected scene, the device further comprising memory means (MM) configured to store identifiers that are respectively associated with a set of reference scenes (SR), each actually detected scene belonging to said set of reference scenes, each reference scene being associated with a reference duration, and said adjustment criterion linked to said at least one preceding actually detected scene is the reference duration corresponding to the preceding actually detected scene.

15. The wireless communication device, comprising detection means (MDET) configured to detect in real time at least one scene, and control means (MCTRL) configured to successively activate the detection means in such a way as to implement a succession of scene detection steps mutually spaced at time intervals and for carrying out an adjustment of the time interval separating a current scene detection step from the preceding scene detection step depending on at least one adjustment criterion linked to K preceding actually detected scenes (I-K-2 to 1-2), K being an integer greater than 1, the device further comprising memory means (MM) configured to store identifiers that are respectively associated with a set of reference scenes (SR), each actually detected scene belonging to said set of reference scenes, each reference scene being associated with a reference duration, and said adjustment criterion linked to said at least one preceding actually detected scene is a duration obtained from at least one of the K reference durations corresponding to the K preceding actually detected scenes.

16. The device according to claim 15, wherein the adjustment criterion linked to said at least one preceding actually detected scene is the average of the K reference durations corresponding to the K preceding actually detected scenes.

17. The device according to claim 15, wherein the adjustment criterion linked to said at least one preceding actually detected scene is the reference duration corresponding to the mostly detected scene from the K preceding actually detected scenes.

18. The device according to one of claims 15 to 17, wherein the control means (MCTRL) are configured to vary the value of K as a function of the nature of the transition between two successive preceding actually detected scenes.

19. The device according to one of claims 14 to 18, equipped with at least one environmental measurement sensor (CPTi) and wherein the detection means are configured to carry out each scene detection step on the basis of measurement values delivered by said at least one environmental measurement sensor.

20. The device according to claim 19, wherein said at least one environmental measurement sensor (CPTi) comprises at least one accelerometer.

21. The device according to one of claims 19 or 20, wherein said at least one environmental measurement sensor (CPTi) comprises at least one audio sensor.

22. The device according to one of claims 14 to 21, equipped with a plurality of environmental measurement sensors (CPTi), and wherein the detection means (MDET) are configured to carry out each scene detection step on the basis of measurement values delivered by said sensors.

23. The device according to claim 22, wherein said environmental measurement sensors (CPTi) are chosen from the group formed by an accelerometer, a gyroscope, a magnetometer, an audio sensor, a barometer, a proximity sensor and an optical sensor.

24. The device according to one of claims 14 to 23, wherein the scene detection means (MDET) are configured to implement a classification algorithm (ALC).

25. The device according to claim 24, wherein the scene detection means (MDET) are configured to implement a classification meta - algorithm.

26. The device according to claim 25, wherein the control means (MCTRL) are configured to carry out a re-initialisation of the classification meta-algorithm after each modification of a time interval.

27. The device according to one of claims 14 to 26, forming a mobile cellular telephone or a digital tablet.
